Europäisches Patentamt

European Patent Office

Office européen des brevets

(11) Publication number: **0 152 674**
**B1**

(12) **EUROPEAN PATENT SPECIFICATION**

(45) Date of publication of patent specification: **14.11.90**

(51) Int. Cl.⁵: **C 21 C 5/56, C 21 C 5/34**

(21) Application number: **84306225.8**

(22) Date of filing: **12.09.84**

(54) Process of making steel in converter using a great amount of iron-bearing cold material.

(30) Priority: **16.02.84 JP 26131/84**

(43) Date of publication of application:
**28.08.85 Bulletin 85/35**

(45) Publication of the grant of the patent:
**14.11.90 Bulletin 90/46**

(84) Designated Contracting States:
**DE FR GB IT SE**

(56) References cited:
**DE-A-3 226 590**
**FR-A-2 170 281**
**GB-A-2 072 706**
**LU-A- 82 813**

**PATENTS ABSTRACTS OF JAPAN, vol. 3, no. 79 (C-51), 6th July 1979, page 119C51; & JP - A - 54 56015 (SHIN NIPPON SEITETSU K.K.) 05-04-1979**
**Lueger Lexikon der Technik, Hüttentechnik, Vol. 3, 1973, p. 500, Rowolt-Taschenbuch Verlag GmbH**

(73) Proprietor: **KAWASAKI STEEL CORPORATION**
**1-28, Kitahonmachi-Dori 1-Chome**
**Chuo-ku Kobe-Shi Hyogo 650 (JP)**

(72) Inventor: **Sudo, Fumio c/o Chiba Works**
**Kawasaki Steel Corporation**
**1, Kawasaki-Cho Chiba City (JP)**
Inventor: **Fujii, Tetsuya c/o Research Laboratories**
**Kawasaki Steel Corporation**
**1, Kawasaki-Cho Chiba City (JP)**
Inventor: **Kato, Yoshiei c/o Research Laboratories**
**Kawasaki Steel Corporation**
**1, Kawasaki-Cho Chiba City (JP)**
Inventor: **Yamada, Sumio c/o Chiba Works**
**Kawasaki Steel Corporation**
**1, Kawasaki-Cho Chiba City (JP)**
Inventor: **Emoto, Kanji c/o Chiba Works**
**Kawasaki Steel Corporation**
**1, Kawasaki-Cho Chiba City (JP)**

(74) Representative: **Overbury, Richard Douglas et al**
**HASELTINE LAKE & CO Hazlitt House 28**
**Southampton Buildings Chancery Lane**
**London WC2A 1AT (GB)**

**Description**

The present invention relates to a steelmaking process in a converter using a great amount of so-called iron-bearing solid material such as cold iron, pellet, scrap and the like and oxygen blowing. More particularly, the invention relates to a steelmaking-refining technique which permits cheaper production of high quality steel free from contamination due to re-sulfurization, re-phosphorization and so on and also which conspicuously prolongs the durable life of the converter.

According to conventional converter refining, it is common practice that a relatively small amount of scrap is added to molten iron supplied from a blast furnace, and that a slag-forming agent and a high flow rate of oxygen are supplied thereto to carry out oxygen-blowing.

In this conventional converter refining, the proportion of scrap in the total amount of all the materials charged into the converter is limited to 20% due to the limitations of the heat source.

Thus, a large amount of scrap cannot be used in this process.

With a view to overcoming this disadvantage and to provide a steelmaking process in which the amount of iron-bearing solid material used corresponds to the total amount, or a major part, of the whole iron charge, there has been proposed a technique in W. German Patent No. 28 38 983 wherein scrap is charged into a converter, and is preheated by using burner nozzles installed at the bottom of the converter and then completely melted, if necessary, by adding a small amount of molten iron; a carbonaceous material such as coke powder or the like is blown into the converter through the nozzles of the converter bottom, and at the same time oxygen is blown from a lance or the bottom nozzles, thereby refining the molten iron.

However, according to this technique, since the heat efficiency is low, it takes an extremely long time to preheat and completely melt the cold material. Further, even when refining does start, it also takes a long time to complete the refining. Therefore, this process has the defect that it is not in harmony with the operation schedule of the succeeding continuous casting apparatus and this makes synchronization difficult. Also damage of the converter wall is vigorous and this reduces the durable life of the converter.

In addition, Japanese Patent Laid-Open Application No. 56(1981)-58,916, discloses a process of making steel from iron-bearing solid material by using a converter provided with oxygen top-blowing devices and carbonaceous material introducing nozzles, in which molten steel in an amount which is 10-30% in excess of the amount per charge is produced from scrap by refining and the excess amount of the molten steel is left in the converter, the next scrap is charged therein, and the next refining is carried out.

However, according to this process, a part of the molten steel is consecutively left for the succeeding steps in the same converter, and therefore, it has the following defects:

(i) A sulfur component from the carbonaceous material such as coal (S: 0.44%, ash: 13.7%, VM: 13.1%) and coke (S: 0.57%, ash: 17.1%) used in a large amount is included in the molten steel.

(ii) Since there exists a wide range of temperature change from the scrap-melting to decarbonization-refining, and the temperature becomes high at the time the molten steel is discharged, the durable life of the refractory material of the converter is short.

(iii) Since the continuous refining is performed from the scrap-melting to the blowing-termination in a single converter, the same is used for a long period of time. Therefore, a large amount of hydrogen from the heat decomposition of propane or the like used for protecting (cooling) the bottom-blowing tuyeres is absorbed into the molten steel.

It is therefore an object of the present invention to provide a steelmaking process which can eliminate the above defects of the prior art converter-refining by using a large amount of iron bearing solid material as raw material relative to the whole iron charge and in which two converters are selectively used.

DE-A-3226590 discloses the production of steel in an oxygen blowing converter in two phases. In a first phase an iron charge comprising scrap and preliminarily treated molten iron is introduced into a converter with carbonaceous material and oxygen is blown in to melt the scrap. In a second phase, a finishing blow is carried out to produce the steel. However this second phase is carried out in the same converter as the first phase.

According to the present invention there is provided a process for producing steel from an iron charge whose major part is iron-bearing solid material by means of two oxygen blowing converters wherein (i) the iron charge consisting of molten iron from a furnace or preliminarily treated molten iron containing not less than 2.5 weight % of carbon and the iron-bearing solid material is melted in a first converter with the addition of carbonaceous material to form preliminarily treated molten iron containing not less than 2.5 weight % of carbon, and (ii) preliminarily treated molten iron from the first converter is transferred to a second converter and refined therein to obtain steel having a desired composition by blowing oxygen into the second converter, no further carbonaceous material being added to the second converter.

According to a preferred embodiment of the invention, the operation carried out in the first converter for obtaining the preliminarily treated molten iron is performed in such a manner that a part of the resultant preliminarily treated molten iron is left in the converter and fresh iron-bearing solid material and carbonaceous material are added thereto and the operation is repeated several times.

According to another preferred embodiment of the invention, slag is removed when the preliminarily treated molten iron obtained in the first converter is transferred to the second converter.

These and other objects, features and advantages of the invention will be well appreciated upon reading the following description of the invention when taken in conjunction with the accompanying drawings. It will be understood that some modifications, variations and changes to the invention as described will be apparent to those skilled in the art without departing from the spirit of the invention as defined by the appended claims.

For a better understanding of the invention and to show how the same may be carried into effect, reference will now be made, by way of example, to the accompanying drawings, in which:-

Fig. 1 is a flow chart schematically illustrating a steelmaking process according to the present invention; and

Fig. 2 is a graph showing the relation between the amount (%) of carbon in the preliminarily treated molten iron and the desulfurization ratio.

In order to melt iron-bearing solid material, such as scrap and the like, in a converter by increasing the proportion of said solid material in the whole iron charge or by using said solid material as the entire iron source, it is necessary that an exothermic reaction is induced by oxygen-blowing with the addition of an inflammable material such as coke, coal, FeSi, and the like to the converter. If the above starting materials are melted by means of the usual converter refining method, there occur the abovementioned problems.

In view of the above, the present invention is to provide a steelmaking process using two converters (one being adapted for blowing and including the carbonaceous material so as to melt the scrap or the like to form a high carbon-containing molten iron and the other being an LD converter, i.e. an ordinary decarbonization refining converter adapted for bottom-blowing, or top- and bottom-blowing) as follows:

Two converters are used, and an iron charge comprising iron-bearing solid material and molten iron or preliminarily treated molten iron with the iron-bearing solid material constituting a major part of the iron charge as well as the carbonaceous material are supplied into the first of the converters, and are melted under oxygen-blowing to obtain preliminarily treated molten iron having a high content of carbon i.e. not less than 2.5%. Then, refining to make a molten steel of desired composition is done in the other converter by oxygen-blowing using, as the starting material, preliminarily treated molten iron from the first converter without the addition of further carbonaceous material.

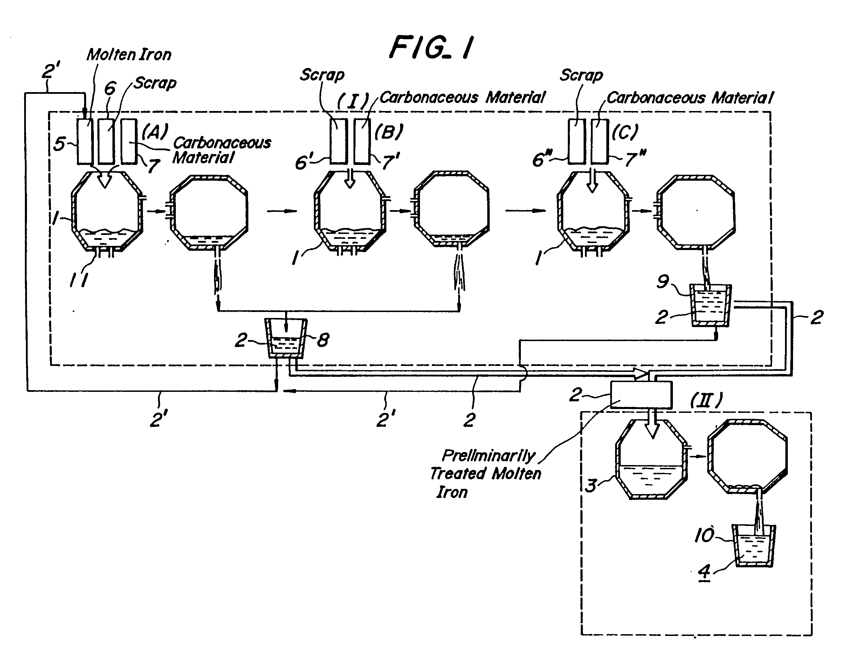

Fig. 1 is a schematic flow chart illustrating the concept of the process of the invention, which comprises step (I) for the production of the preliminarily treated molten iron 2 in the first converter 1 and step (II) for the production of a desired molten steel 4 in the second converter 3 using the preliminarily treated molten iron 2 as the starting material without addition of carbonaceous material. These two steps (I) and (II) will be explained in more detail as follow:

Step (I):

(I) First, at Stage (A), (i) molten iron 5 (which is molten iron from a blast furnace or an electric furnace or a recirculated part 2' of the preliminarily treated molten iron obtained previously), (ii) iron-containing solid material 6 such as scrap, cold iron etc., and (iii) carbonaceous material 7 such as coal, coke, etc. are charged into the first converter 1 or blown therein through tuyeres 11 and melted by oxygen-blowing. A part of the thus obtained preliminarily treated molten iron is discharged into a ladle 8. Subsequently, at Stage (B), scrap 6' and the necessary amount of carbonaceous material 7' are additionally charged or blown into the same converter 1 (in which some of the preliminarily treated molten iron has been left), and completely melted by oxygen-blowing. A part of the thus obtained preliminarily treated molten iron is again discharged into the ladle 8, and the remaining part is left in the converter 1. Lastly, at Stage (C), scrap 6'' and carbonaceous material 7'' are additionally charged or blown into the converter 1 as in the case of Stage (B), and are melted by oxygen-blowing. Step (I) is terminated at a time when sufficient preliminarily treated molten iron 2 is obtained for supplying to the succeeding step (II), and the preliminarily treated molten iron in the converter 1 is then all poured into a ladle 9.

Any slag formed at this stage is removed. As shown in Fig. 1, a part 2' of the preliminarily treated molten iron 2 may be re-circulated from the ladle 8 positioned at a place where Stage (B) terminates or the ladle 9 back to the converter 1 for use as part of the iron charge at the beginning of Stage (A). Although the above specific example refers to three Stages (A) to (C) in the first Step (I), the number of stages may be reduced or increased so long as the preliminarily treated molten iron 2 can be prepared in the necessary amount.

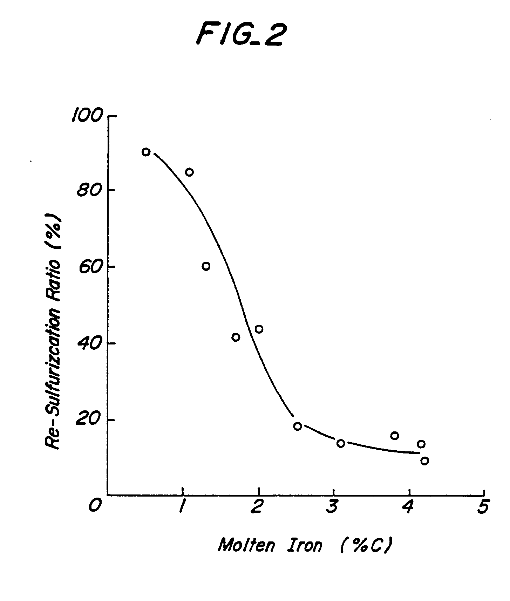

Fig. 2 shows the relation between the concentration of carbon in the preliminarily treated molten iron and the re-sulfurization ratio at the end of each stage of step (I). From this Figure, it will be understood that in order to keep the re-sulfurization ratio $\eta$ low, it is necessary to restrain the concentration of carbon in the preliminarily treated molten iron 2 to be not less than 2.5% ((C% $\geq$ 2.5%). In practice this carbon is indispensable as a heating source in the oxidation reaction in Step (II).

The re-sulfurization ratio $\eta$ is determined as follows:

$$\eta = \frac{\text{Weight (kg) of sulfur in molten iron} \times 100}{\text{Weight (kg) of sulfur in carbonaceous material added at each stage of step (I)}}$$

Step (II):

The preliminarily treated molten iron 2 obtained in step (I) is poured from the ladle 9 into the second

3

EP 0 152 674 B1

separate converter 3 and oxygen is blown from a lance and/or bottom-blown tuyeres to effect steelmaking-refining in accordance with the conventional process. During this step no carbonaceous material is added. Then, the molten steel 4 having the desired composition is discharged into the ladle 10.

Alternatively, the preliminarily treated molten iron 2 in the ladle 8 which has been produced by step (I) stage (B) may be charged into the second converter 3 together with the molten iron from ladle 9 and then subjected to refining.

According to the present invention, the following advantages can be obtained as compared with the case where Step (I), Stages (A) to (C) and Step (II) are carried out in a common converter:

(i) It is merely necessary to modify only one converter in a conventional converter installation so as to provide the necessary structure for adding the carbonaceous material to the converter as a heating source.

(ii) Employment of two converters with no addition of carbonaceous material to the second converter used for effecting step (II) alleviates the fear that re-sulfurization may be caused by the sulfur, ash and the like contained in the carbonaceous material. Further, according to the present invention, Step (II) predominantly effects the decarburization-refining. If this refining is carried out only by using a top-blown lance, absorption of hydrogen from the tuyere-cooling gas such as propane, etc., can be avoided. Even if bottom-blowing is effected, the hydrogen absorption can be limited to a lower level because of the extremely shortened total refining time.

(iii) Since scrap can be used as the major part of the iron charge for the production of the preliminarily treated molten iron, the necessary amount of slag-forming agent for desulfurization and dephosphorization may be reduced because of the small amounts of sulphur and phosphorous inherently contained in the scrap. This results in increased iron yield and decreased ferro-alloy consumption.

(iv) Since two converters can be simultaneously operated, the total blowing time in each converter can be shortened and the converter operation can be easily synchronised with the operation of an associated continuous casting apparatus.

(v) The method according to the invention is suitable for melting steel having extremely low sulphur and phosphorous contents.

(vi) Since there is no fear of re-sulfurization, a slag coating for the protection of the walls of each converter can be safely applied, so that the unit consumption of the refractory material is reduced, and the converter durable life is increased.

The invention will be explained more in detail by referring to an example in comparison with a comparative example, but such an example is merely illustrative of the invention.

## Example

Steelmaking was carried out using two converters in accordance with the steps shown in Fig. 1.

Step (I):

500 kg/min of coal was introduced into the bottom-blown first converter, 250 kg/min of this coal was thrown down from the throat and the remaining 250 kg/min was injected through three out of a total of seven tuyeres.

Stage (A);
i) Scrap: 30 tons, blast furnace molten iron: 60 tons
ii) Lime (CaO): 0.5 ton, coal: 10.3 tons, oxygen 8,050 $Nm^3$, propane: 320 $Nm^3$
iii) discharged preliminarily treated molten iron (%):- (C:3.51, Mn:0.30, P:0.005, S:0.008): 25 tons, 1,460°C
iv) time between the scrap-charging and preliminarily treated molten iron discharging: 24 minutes

Stage (B):
i) Scrap: 45 tons
ii) lime: 0.4 ton, coal: 12 tons, oxygen: 11,200 $Nm^3$, propane 450 $Nm^3$
iii) discharged preliminarily treated molten iron (%):- (C:3.43, Mn:0.32, P:0.007, S:0.011): 42 tons, 1,470°C
(iv) time between the scrap-charging and the preliminarily treated molten iron discharging: 22 minutes

Stage (C):
i) Scrap: 43 tons
ii) Lime: 0.6 tons, coal: 9 tons, oxygen; 5,450 $Nm^3$, propane: 222 $Nm^3$
iii) discharged preliminarily treated molten iron (%):- (C:3.20, Mn:0.29, P:0.006, S:0.009): 104 tons, 1,460°C
iv) time between the scrap-charging and the preliminarily treated molten iron-discharging: 19 minutes

Step (II):
104 tons of the preliminarily treated molten iron (1,460°C) obtained in the above Stage (C) was refined under the following conditions using the top-blown second converter (LD converter).
i) blown oxygen: 3,600 $Mn^3$, lime (CaO): 0.6 ton, coal: nil

4

ii) discharged molten steel: 102 tons temperature of discharged molten steel: 1,660°C molten steel composition (%):- (C:0.04, Mn:0.20, P:0.007, S:0.007, H:1.7 ppm)

iii) time period between the preliminarily treated molten iron-charging and molten steel-discharging: 20 minutes

As a result, the total melting time for step (I) was 65 minutes, and the refining time in the LD converter in step (II) was 20 minutes. When step (II) was carried out during Stage (A) of the next step (I), it was possible to make 100 tons of molten steel in about 65 minutes. This enabled the operation of the converters to be synchronised with the continuous casting apparatus which, in turn, was capable of being synchronised with the operation of other continuous casting apparatus. Further, since the sulphur content of the preliminarily treated molten iron can be suppressed to a low level, it is possible to carry out oxygen-blowing in step (II) using a minimum amount of slag and lime (CaO) can be saved. The erosion rate of the tuyeres was 0.3 mm/heat on average over the seven tuyeres of the bottom blowing converter, and it was found that the process was beneficial for the durable life of the converter.

Comparative Example

This comparative example is a case where the process was carried out by the technique of Japanese Patent Laid-Open Application No. 56(1981)-58916 in which step (II) is performed instead of Stage (C) using the same single converter as in the case of step (I) in the above Example.

Stage (A):
i) scrap 30.6 tons + molten iron: 60 tons
ii) lime (CaO): 0.5 tons, coal: 11 tons, oxygen: 8,500 Nm³, propane: 340 Nm³
iii) discharged molten iron (%):- (C:3.25, Mn:0.27, P:0.004, S:0.010): 30.5 tons, 1,482°C
iv) time between the scrap-charging and the molten iron discharging: 25 minutes

Stage (B):
i) scrap 40 tons
ii) lime: 0.5 tons, coal: 12 tons, oxygen: 10,700 Nm³, propane: 428 Nm³
iii) discharged molten iron (%):- (C:3.51, Mn:0.34, P:0.007, S:0.009): 40.2 tons, 1,460°C
iv) time between the scrap-charging and the molten iron-discharging; 21 minutes.

Stage corresponding to Stage (C) and Step (II):
55.6 tons of scrap was added subsequent to the above Stage (B).
i) lime: 1.5 tons, coal: 6.8 tons, oxygen: 8,500 Nm³, propane, 340 Nm³
ii) discharged molten steel: 98 tons, 1670°C molten steel composition (%):- (C:0.01, Mn:0.1, P:0.04, S:0.053, H:9.8 ppm)
iii) time between the molten iron-charging and the molten steel discharging: 41 minutes

As a result, the total blowing time was 87 minutes, and it was found that this comparative example was time-consuming as compared with the above Example (65 minutes) in accordance with the present invention. As compared with the molten iron discharged in Stage (B) in which the sulphur content was 0.009%, the content of sulfur in the final molten steel was as high as 0.053% as a result of re-sulfurization. Also the hydrogen content was higher than that in the case of the above Example of the invention. The erosion rate of the tuyeres was 10.4 mm heat on average, and was larger as compared with the Example of the invention. Thus the converter durable life was adversely affected in the comparative example compared to the above Example of the invention. In this respect, the durable life of the refractory materials was further shortened due to the difference of about 200°C between the temperature of the discharged molten iron in the Example of the invention and that of the discharged molten steel in the comparative example and also to the longer refining time needed.

As mentioned above, according to the present invention, when the refining is performed in the converter using an iron charge which comprises a major part of scrap and the like, it is possible to effectively prevent re-sulfurization, re-phosphorization and absorption of hydrogen which conventionally occur and thus the process of the invention is suitable for the production of high quality steel at a cheap cost. Further, the durable life of the converter can be prolonged due to the lighter loads on the refractory. materials.

**Claims**

1. A process for producing steel from an iron charge whose major part is iron-bearing solid material (6, 6', 6'') by means of two oxygen blowing converters wherein (i) the iron charge consisting of molten iron (5) from a furnace or preliminarily treated molten iron (2') containing not less than 2.5 weight % of carbon and the iron-bearing solid material is melted in a first converter (1) with the addition of carbonaceous material to form preliminarily treated molten iron (2) containing not less than 2.5 weight % of carbon, and (ii) preliminarily treated molten iron (2) from the first converter (1) is transferred to a second converter (3) and refined therein to obtain steel having a desired composition by blowing oxygen into the second converter, no further carbonaceous material being added to the second converter.

5

2. A process according to claim 1 and comprising the steps of transferring a part of the preliminarily treated molten iron (2') formed in the first converter (1) to the second converter (3) for refining into steel and adding further iron-bearing solid material (6', 6'') and further carbonaceous material (7', 7'') to the remainder of the preliminarily treated molten iron in the first converter (1) for forming further preliminarily treated molten iron (2), said steps being repeated a plurality of times.

3. A process according to claim 1 or 2, wherein any formed slag is removed when the preliminarily treated molten iron (2) is transferred from the first converter (1) to the second converter (3).

**Patentansprüche**

1. Verfahren zur Erzeugung von Stahl aus einer EisenBeschickung, deren Hauptteil ein Eisen führendes festes Material (6, 6', 6'') ist, mittels zweier Sauerstoff-Blaskonverter, worin
(i) die aus geschmolzenem Eisen (5) aus einem Ofen oder vorläufig behandeltem geschmolzenen Eisen (2'), das nicht weniger als 2,5 Gew.-% Kohlenstoff enthält, und dem Eisen führenden festen Material bestehende Eisen-Beschickung in einem ersten Konverter (1) unter Zusatz eines kohlenstoffhaltigen Materials geschmolzen wird, wodurch ein vorläufig behandeltes geschmolzenes Eisen (2), das nicht weniger als 2,5 Gew.-% Kohlenstoff enthält, gebildet wird, und
(ii) das vorläufig behandelte geschmolzene Eisen (2) aus dem ersten Konverter (1) in einen zweiten Konverter (3) überführt und in diesem zur Gewinnung eines Stahls mit einer gewünschten Zusammensetzung durch Einblasen von Sauerstoff in den zweiten Konverter gefrischt wird, wobei dem zweiten Konverter kein weiteres kohlenstoffhaltiges Material zugesetzt wird.

2. Verfahren nach Anspruch 1 und umfassend die Schritte des Überführens eines Teils des in dem ersten Konverter (1) gebildeten vorläufig behandelten geschmolzenen Eisens (2') in den zweiten Konverter (3) zur Veredlung zu Stahl und des Zusetzens von weiterem Eisen führenden festen Material (6', 6'') und weiterem kohlenstoffhaltigen Material (7', 7'') zu dem Rest des vorläufig behandelten geschmolzenen Eisens in dem ersten Konverter (1) zur Bildung von weiterem vorläufig behandelten geschmolzenen Eisen (2), wobei diese Schritte mehrfach wiederholt werden.

3. Verfahren nach den Ansprüchen 1 oder 2, worin jegliche gebildete Schlacke entfernt wird, wenn das vorläufig behandelte geschmolzene Eisen (2) aus dem ersten Konverter (1) in den zweiten Konverter (3) überführt wird.

**Revendications**

1. Une méthode pour obtenir de l'acier à partir d'une charge de fer dont la majeure partie se compose de matière solide contenant du fer (6, 6', 6'') au moyen de deux convertisseurs à soufflage d'oxygène, dans laquelle (i) la charge de fer consiste en fer fondu (5) à partir d'un four ou en fer fondu ayant été soumis à un traitement préalable (2') ne contenant pas moins de 2,5% de carbone en poids, la matière solide contenant du fer étant fondue dans un premier convertisseur (1) avec addition de matériau carbonacé pour l'obtention d'un fer en fusion (2) ayant été soumis à un traitement préliminaire et ne contenant pas moins de 2,5% en poids de carbone; et (ii) le fer en fusion (2) ayant été soumis à un traitement préliminaire et provenant du premier convertisseur (1) est transféré à un deuxième convertisseur (3) et affiné dans ce deuxième convertisseur de manière à obtenir de l'acier ayant une composition désirée par soufflage d'oxygène, aucun autre matériau carbonacé n'étant ajouté dans le deuxième convertisseur.

2. Une méthode selon la revendication 1, comprenant les opérations consistant à transférer une partie du fer en fusion de traitement préliminaire (2') formé dans le premier convertisseur (1) dans le deuxième convertisseur (3) pour affinage produisant de l'acier, et à ajouter d'autre matière solide contenant du fer (6', 6'') et d'autre matériau carbonacé (7', 7'') au reste de fer en fusion de traitement préliminaire dans le premier convertisseur (1) de manière à obtenir d'autre fer en fusion de traitement préliminaire (2), les dites opérations étant répétées un certain nombre de fois.

3. Une méthode selon la revendication 1 ou 2, dans laquelle tout laitier quelconque formé est enlevé lorsque le fer en fusion de traitement préliminaire (2) est transféré du premier convertisseur (1) au deuxième convertisseur (3).

FIG. 1

EP 0 152 674 B1

## FIG_2